# EUROPEAN PATENT APPLICATION

(11) **EP 3 614 720 A1**
(43) Date of publication of application: **26.02.2020**
(21) Application number: 18788352.5
(22) Date of filing: 17.04.2018
(51) Int. Cl.: H04W 28/02

(54) **METHOD AND SYSTEM FOR CONTROLLING USER PLANE LOAD OF GATEWAY**

(30) Priority: 20.04.2017 CN 201710259249
(71) Applicant: ZTE Corporation, Shenzhen, Guangdong 518057 (CN)
(72) Inventor: LIU, Wenhao, Shenzhen Guangdong 518057 (CN)
(74) Representative: Hervouet-Malbec, Sylvie
(86) International application number: PCT/CN2018/083332
(87) International publication number: WO 2018/192477

(57) **Abstract**

The present disclosure provides a method and system for controlling a user plane load of a gateway. The method includes: determining, by a mobile management entity, whether an overload message carries user plane overload information after receiving the overload message from the gateway and controlling, by the mobile management entity, a user plane tunnel according to a load reduction proportion and a load control duration included in the user plane overload information, in response to that the overload message carries the user plane overload information.

## Description

### Field

The present disclosure relates to the technical field of evolved packet core (EPC) network communications, and more particularly relates to a method and system for controlling a user plane load of a gateway.

### Background

With the evolution of mobile communication systems to an evolved packet system (EPS), as well as the popularization of 4G terminals and increase of the variety of services, the average monthly data flow per user is increasing year by year. A gateway (GW) network element is the only way for data services. The sudden increase of data flow will inevitably affect the load of the GW. In particular, some holidays or emergencies may possibly cause an overload condition of the GW.

Since a GW node is an important node in the EPS, it is an important subject to research how to deal with the overload state of the GW in time to avoid congestion and even downtime of the GW.

A method of adjusting overload control of a general packet radio service (GPRS) tunneling protocol control plane (GTP-C) of the GW through a mobility management entity (MME) is described in the 3GPP TS 23401 protocol. However, since a user plane does not pass through the MME, the MME cannot perceive a user plane load condition of the GW. In the related art, there is no method for processing an overload state of a user plane through the MME. The load of the GW will be further deteriorated until the GW is down if the overload state of the user plane of the GW is not effectively controlled.

### Summary

Since a load condition of a user plane of a gateway (GW) side cannot be informed to a mobility management entity (MME), the MME is unable to relieve an overload state of the GW due to the user plane on purpose. Embodiments of the present disclosure provide a method and system for controlling a user plane load of a gateway (GW), so as to at least partially solve the above problems.

An embodiment of the present disclosure provides a method for controlling a user plane load of a gateway (GW), including: determining, by a mobile management entity (MME), whether an overload message carries user plane overload information after receiving the overload message from the GW; and controlling, by the MME, a user plane tunnel according to a load reduction proportion and a load control duration included in the user plane overload information, in response to that the overload message carries the user plane overload information.

An embodiment of the present disclosure provides a system for controlling a user plane load of a gateway (GW), including: a mobile management entity (MME) and a GW. The MME includes: a determining module configured to determine whether an overload message carries user plane overload information after receiving the overload message from the GW; and a load control module configured to control a user plane tunnel according to a load reduction proportion and a load control duration included in the user plane overload information, in response to that the determining module determines that the overload message carries the user plane overload information.

An embodiment of the present disclosure further provides a computer readable storage medium storing a computer program which, when is executed by a processor, cause the processor to perform the method for controlling the user plane load of the GW according to the present disclosure.

### Brief Description of the Drawings

Fig. 1 is a flow diagram of a method for controlling a user plane load of a gateway (GW) according to an embodiment of the present disclosure;
Fig. 2 is a schematic diagram of a system for controlling a user plane load of a gateway (GW) according to an embodiment of the present disclosure;
Fig. 3 is a flow diagram of a method for processing user plane overload information through a GW and a mobile management entity (MME) according to an embodiment of the present disclosure;
Fig. 4 is a flow diagram of a method for processing a newly accessed user through the MME according to an embodiment of the present disclosure; and
Fig. 5 is a flow diagram of a method for processing an already accessed user through the MME according to an embodiment of the present disclosure.

### Detailed Description of the Embodiments

The embodiments of the present disclosure are described below with reference to the accompanying drawings, and it should be understood that the embodiments described below are merely illustrative and explanatory of the present disclosure and are not restrictive of the present disclosure.

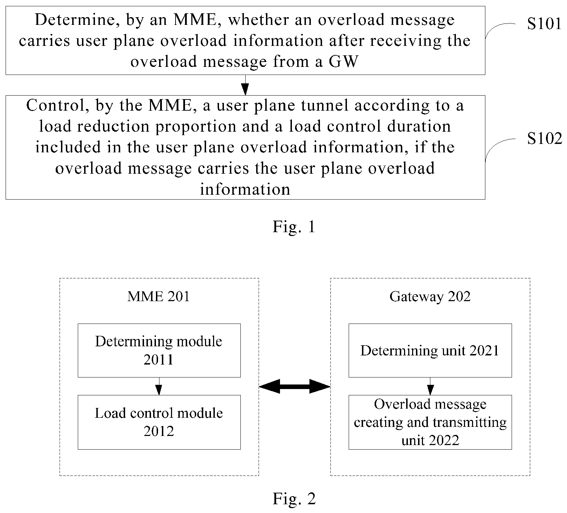

Fig. 1 is a flow diagram of a method for controlling a user plane load of a gateway (GW) according to an embodiment of the present disclosure. As shown in Fig. 1, the method for controlling the user plane load of the GW according to the embodiment of the present disclosure includes steps S101 and S102.

In step S101, a mobile management entity (MME) determines whether an overload message carries user plane overload information after receiving the overload message from the GW.

In step S102, the MME controls a user plane tunnel according to a load reduction proportion and a load control duration included in the user plane overload information, in response to that the overload message carries the user plane overload information.

According to the embodiment of the present disclosure, the GW is a GW with a control plane and/or a user plane in an overload state. The GW may include a packet data network gateway (PGW) and/or a service gateway (SGW).

According to the embodiment of the present disclosure, the GW may monitor a load state of its user plane before the MME receives the overload message from the GW, so as to determine whether the user plane is in an overload state. The GW creates the overload message carrying the user plane overload information, if the user plane is in the overload state, and transmits the overload message to the MME. The GW creates an overload message carrying no user plane overload information, if the user plane is not in the overload state, and transmits the overload message to the MME.

According to the embodiment of the present disclosure, the step that the GW creates the overload message carrying the user plane overload information includes that: the GW acquires a load parameter of the user plane, if the user plane is in the overload state; the GW determines the load reduction proportion and the load control duration for controlling the overload state of the user plane according to the acquired load parameter of the user plane; and the GW adds the determined load reduction proportion and load control duration into the user plane overload information, and creates the overload message carrying the user plane overload information.

According to the embodiment of the present disclosure, the step that the MME controls the user plane tunnel according to the load reduction proportion and the load control duration included in the user plane overload information may include that: the MME selects part of accessed users from all currently accessed users according to the load reduction proportion included in the user plane overload information, and releases S1 connection of the selected accessed users; and the MME refuses a bearer creation request of the selected accessed users or the GW within the load control duration included in the user plane overload information.

In addition, according to the embodiment of the present disclosure, the overload message is processed according to a method specified in the 3GPP TS 23401 protocol, if the overload message carries no user plane overload information.

Fig. 2 is a schematic diagram of a system for controlling a user plane load of a gateway (GW) according to an embodiment of the present disclosure. As shown in Fig. 2, the system for controlling the user plane load of the GW according to the embodiment of the present disclosure includes a mobile management entity (MME) 201 and a GW 202. The MME 201 includes a determining module 2011 and a load control module 2012. The determining module 2011 determines whether an overload message carries user plane overload information after receiving the overload message from the GW 202. The load control module 2012 controls a user plane tunnel according to a load reduction proportion and a load control duration included in the user plane overload information, when the determining module 2011 determines that the overload message carries the user plane overload information.

According to the embodiment of the present disclosure, the GW 202 is a GW with a control plane and/or a user plane in an overload state. The GW 202 includes a packet data network gateway (PGW) and/or a service gateway (SGW).

According to the embodiment of the present disclosure, the GW 202 may include a determining unit 2021 and an overload message creating and transmitting unit 2022. The determining unit 2021 is configured to monitor a load state of the user plane of the GW 202, so as to determine whether the user plane is in the overload state. The overload message creating and transmitting unit 2022 creates the overload message carrying the user plane overload information, when the determining unit 2021 determines that the user plane is in the overload state, and transmits the overload message to the MME 201. The overload message creating and transmitting unit 2022 creates an overload message carrying no user plane overload information, when the determining unit 2021 determines that the user plane is not in the overload state, and transmits the overload message to the MME 201.

According to the embodiment of the present disclosure, the overload message creating and transmitting unit 2022 may include an acquiring subunit, a determining subunit and a creating subunit. The acquiring subunit acquires a load parameter of the user plane when the determining unit 2021 determines that the user plane is in the overload state. The determining subunit is configured to determine the load reduction proportion and the load control duration for controlling the overload state of the user plane according to the acquired load parameter of the user plane. The creating subunit is configured to add the determined load reduction proportion and load control duration into the user plane overload information, and create the overload message carrying the user plane overload information.

According to the embodiment of the present disclosure, the load control module 2012 may include a first load control unit and a second load control unit. The first load control unit is configured to select part of accessed users from all currently accessed users according to the load reduction proportion included in the user plane overload information, and release S1 connection of the selected accessed users. The second load control unit is configured to refuse a bearer creation request of the selected accessed users or the GW 202 within the load control duration included in the user plane overload information.

According to the embodiment of the present disclosure, the load control module 2012 processes the overload message according to a method specified in the 3GPP TS 23401 protocol, when the determining module 2011 determines that the overload message carries no user plane overload information.

The present disclosure is further described below with reference to exemplary embodiments.

According to the embodiment of the present disclosure, a field "User Plane Overload" may be added in Overload Control Information defined in the 3GPP TS 29274 protocol, and has an attribute of a condition parameter. A carrying condition is that the GW detects that the current load is in an overload state, and a user plane load is a main reason of the overload.

The GW calculates a user plane load proportion to be reduced and a control duration according to a current user plane load condition, if the GW detects that its user plane is in the overload state, and respectively fills the calculated reduction proportion and control duration into original fields "Overload Reduction Metric" and "Period of Validity" in the overload control information. A general packet radio service (GPRS) tunneling protocol control plane (GTP-C) message carries the overload control information with the field "User Plane Overload" according to an existing flow, so as to inform the MME.

According to the embodiment of the present disclosure, the GW may decide whether to carry the field "User Plane Overload" according to a configuration strategy, if the GW detects that the control plane and the user plane are simultaneously overloaded.

The MME determines whether the GTP-C message carries the user plane overload information after receiving the message from the GW. The MME controls a control plane message according to the 3GPP TS 23401 protocol, if the overload information does not include the field "User Plane Overload" (i.e., carrying no user plane overload information). The MME controls the user plane tunnel, if the overload information includes the field "User Plane Overload" (i.e., carrying the user plane overload information).

The MME processes the carried user plane overload information as follows: firstly, the MME needs to store the overload information of the GW, and marks that a corresponding overload of the GW is caused by the user plane, so as to control the user plane tunnel of the GW; secondly, the MME needs to select a certain number of users (such as newly accessed users or already accessed users) according to the Overload Reduction Metric in the overload information; thirdly, for the newly accessed users, S1 connection of the users needs to be released, and furthermore, if the users initiate a service request or a tracking area update (TAU) request with an active flag again, the MME may directly refuse this type of request to stop the creation of the user plane within the Period of Validity (e.g., the control duration) specified in the overload information; and if a downlink data notification (DDN) request or a dedicated bearer creation request is received, the MME may directly reply response failure. In addition, if the MME simultaneously records user plane overload information and control plane overload information of a same GW, the MME may decide to use which type of information to perform the overload control according to configuration strategy; fourthly, for the already accessed users, the MME needs to select users in connected state, the MME firstly determines whether the user have created an dedicated bearer, if the user have created the dedicated bearer, the MME needs to determine that the dedicated bearer is neither an IP multimedia subsystem (IMS) bearer, nor an emergency bearer, only under such situation, the MME starts a dedicated bearer deletion flow, and otherwise, the MME conducts no processing; if the user have not created the dedicated bearer, the MME may start an S1 connection release flow for the user, and if the user or the GW re-starts the dedicated bearer creation flow within the Period of Validity (e.g., the control duration), the MME may reply a failure response to refuse the bearer creation flow.

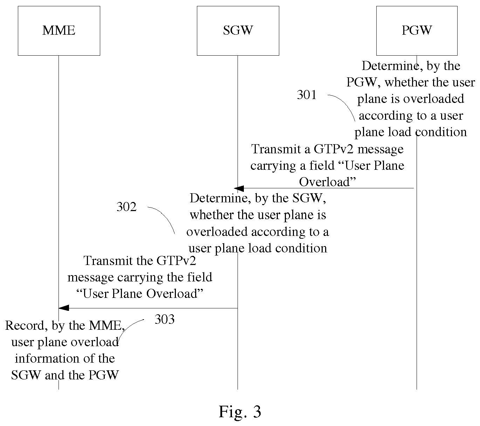

Fig. 3 is a flow diagram of a method for processing user plane overload information through a GW and a MME according to an embodiment of the present disclosure. As shown in Fig. 3, the method for processing the user plane overload information through the GW and the MME includes steps 301 to 303.

In Step 301, if a packet data network gateway (PGW) has been overloaded, the PGW determines whether the current overload is caused by the user plane; if the current overload is caused by the user plane, a transmitted GTPv2 message carries PGW overload information element with a field "User Plane Overload"; and if the current overload is not caused by the user plane, the transmitted GTPv2 message carries PGW overload information element without the field "User Plane Overload". The GTPv2 message being capable of carrying the PGW overload information element is defined in the 3GPP TS 29274 protocol.

In Step 302, if a service gateway (SGW) has been overloaded, the SGW determines whether the current overload is caused by the user plane; if the current overload is caused by the user plane, the transmitted GTPv2 message carries SGW overload information element with the field "User Plane Overload"; and if the current overload is not caused by the user plane, the transmitted GTPv2 message carries SGW overload information element without the field "User Plane Overload". The GTPv2 message being capable of carrying the SGW overload information element is defined in the 3GPP TS 29274 protocol.

In Step 303, after receiving the GTPv2 message carrying the overload control information, if the overload information includes the field "User Plane Overload", the MME records and marks a corresponding overloaded SGW and/or PGW information, that is, the information is marked as overload information caused by the user plane.

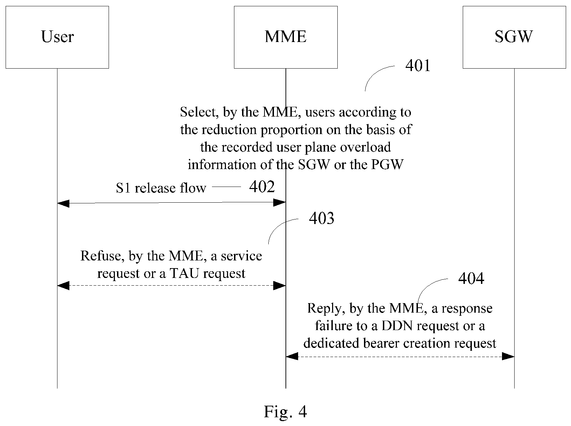

Fig. 4 is a flow diagram of a method for processing a newly accessed user through the MME according to an embodiment of the present disclosure. As shown in Fig. 4, the method for processing the newly accessed user through the MME includes steps 401 to 404.

In Step 401, the MME selects the newly accessed user according to the reduction proportion on the basis of the recorded GW information of user plane being overload, and controls the GW, if the GW selected by the new user is in an list of overload user plane.

In Step 402, the MME actively starts S1 connection release flow after the new user accesses successfully and do not enter an idle state.

In Step 403, after S1 is released, if the user initiate a service request, the MME refuses to conduct processing within a Period of Validity (e.g., a control duration) for the overload; and if the user initiate a TAU request with an active flag, the MME also refuses to conduct processing.

In Step 404, after S1 is released, during the Period of Validity (e.g., the control duration) for the overload, if the SGW initiates a DDN request, the MME replies a failure response to not page the users; and if the SGW initiates a dedicated bearer creation request, the MME also replies the failure response to not page the users.

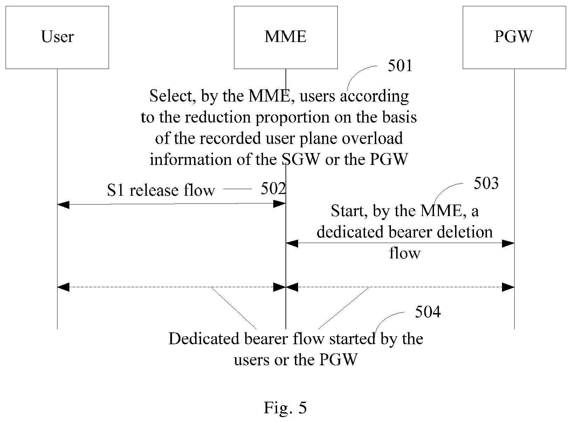

Fig. 5 is a flow diagram of a method for processing an already accessed user through the MME according to an embodiment of the present disclosure. As shown in Fig. 5, the method for processing the accessed user through the MME according to an embodiment of the present disclosure may include steps 501 to 504.

In Step 501, the MME selects the already accessed user in connected state according to the reduction proportion on the basis of the recorded GW information of user plane being overload, and controls the GW, if the GW being used by the user is in an list of overload user plane.

In Step 502, the MME actively triggers the S1 release flow, if the users only have a default bearer but not a dedicated bearer. The subsequent processing is the same as that in Steps 403 and 404 shown in Fig. 4.

In Step 503, if the user has already created the dedicated bearer, the MME determines whether the dedicated bearer is an IMS bearer or an emergency bearer; if the dedicated bearer is the IMS bearer or the emergency bearer, the MME conducts no processing; and if the dedicated bearer is not the IMS bearer or the emergency bearer, the MME starts a dedicated bearer deletion flow.

In Step 504, after the dedicated bearer is deleted, during the Period of Validity (e.g., the control duration) for the overload, if the user or the GW re-starts a dedicated bearer creation flow, the MME refuses to conduct processing.

Obviously, those skilled in the art should understand that the modules or steps of the above embodiments of the present disclosure may be implemented by a general computing device, which may be concentrated on a single computing device or distributed on a network composed of a plurality of computing devices. The modules or steps of the embodiments of the present disclosure may be implemented by program codes executable by computing devices, so that the program codes may be stored in a computer storage medium (a read only memory (ROM)/random access memory (RAM), a disk and an optical disk) and executed by the computing devices. Furthermore, in some cases, the steps shown or described may be performed in an order different from that described herein, or they are separately fabricated into individual integrated circuit modules, or a plurality of modules or steps among them are fabricated into a single integrated circuit module for implementation. Therefore, the present disclosure is not limited to any particular hardware and software combinations.

According to the embodiments of the present disclosure, an implementable method for adjusting the user plane load of the GW is provided for the deficiencies in protocols. The MME manages the user plane tunnel to help the GW network element to relieve the overload state caused by the user plane.

Although the present disclosure has been described in detail above, the present disclosure is not limited thereto, and various modifications can be made by those skilled in the art in accordance with the principle of the present disclosure. Therefore, any modifications that are made in accordance with the principle of the present disclosure shall be understood as falling within the protection scope of the present disclosure.

## Claims

1. A method for controlling a user plane load of a gateway (GW), comprising:
determining, by a mobile management entity (MME), whether an overload message carries user plane overload information after receiving the overload message from the GW; and
controlling, by the MME, a user plane tunnel according to a load reduction proportion and a load control duration comprised in the user plane overload information, in response to that the overload message carries the user plane overload information.

2. The method according to claim 1, wherein the GW is a GW with a control plane and/or a user plane in an overload state; and
the GW comprises at least one of a packet data network gateway (PGW) and a service gateway (SGW).

3. The method according to claim 2, wherein before receiving, by the MME, the overload message from the GW, the method further comprises:
monitoring, by the GW, the load state of the user plane of the GW, so as to determine whether the user plane is in the overload state;
creating, by the GW, the overload message carrying the user plane overload information, in response to that the user plane is in the overload state, and transmitting the overload message to the MME; and
creating, by the GW, the overload message carrying no user plane overload information, in response to that the user plane is not in the overload state, and transmitting the overload message to the MME.

4. The method according to claim 3, wherein the step of creating the overload message carrying the user plane overload information comprises:
acquiring a load parameter of the user plane, in response to that the GW determines that the user plane is in the overload state;
determining, by the GW, the load reduction proportion and the load control duration for controlling the overload state of the user plane according to the acquired load parameter of the user plane; and
adding, by the GW, the determined load reduction proportion and load control duration into the user plane overload information, and creating the overload message carrying the user plane overload information.

5. The method according to claim 4, wherein the step of controlling the user plane tunnel according to the load reduction proportion and the load control duration comprised in the user plane overload information comprises:
selecting, by the MME, part of accessed users from all currently accessed users according to the load reduction proportion comprised in the user plane overload information, and releasing S1 connection of the selected accessed users; and
refusing, by the MME, a bearer creation request of the selected accessed users or the GW within the load control duration comprised in the user plane overload information.

6. A system for controlling a user plane load of a gateway (GW), comprising a mobile management entity (MME) and the GW, wherein the MME comprises:
a determining module configured to determine whether an overload message carries user plane overload information after receiving the overload message from the GW; and
a load control module configured to control a user plane tunnel according to a load reduction proportion and a load control duration comprised in the user plane overload information, in response to that the determining module determines that the overload message carries the user plane overload information.

7. The system according to claim 6, wherein the GW is a GW with a control plane and/or a user plane in an overload state; and
the GW comprises at least one of a packet data network gateway (PGW) and a service gateway (SGW).

8. The system according to claim 7, wherein the GW comprises:
a determining unit configured to monitor a load state of the user plane of the GW, so as to determine whether the user plane is in an overload state; and
an overload message creating and transmitting unit configured to create the overload message carrying the user plane overload information, in response to that the determining unit determines that the user plane is in the overload state, and transmit the overload message to the MME; and create an overload message carrying no user plane overload information, in response to that the determining unit determines that the user plane is not in the overload state, and transmit the overload message to the MME.

9. The system according to claim 8, wherein the overload message creating and transmitting unit comprises:
an acquiring subunit configured to acquire a load parameter of the user plane when the determining unit determines that the user plane is in the overload state;
a determining subunit configured to determine the load reduction proportion and the load control duration for controlling the overload state of the user plane according to the acquired load parameter of the user plane; and
a creating subunit configured to add the determined load reduction proportion and load control duration into the user plane overload information, and create the overload message carrying the user plane overload information.

10. The system according to claim 9, wherein the load control module comprises:
a first load control unit configured to select part of accessed users from all currently accessed users according to the load reduction proportion comprised in the user plane overload information, and release S1 connection of the selected accessed users; and
a second load control unit configured to refuse a bearer creation request of the selected accessed users or the GW within the load control duration comprised in the user plane overload information.

11. A computer readable storage medium storing a computer program which, when is executed by a processor, cause the processor to perform the method for controlling the user plane load of the gateway according to any one of claims 1 to 5.
